(19) Europäisches Patentamt
European Patent Office
Office européen des brevets

(11) **EP 1 264 169 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(21) Anmeldenummer: **01958054.7**

(22) Anmeldetag: **04.08.2001**

(51) Int Cl.:
***G01N 21/27*** *(2006.01)*    ***G01N 21/47*** *(2006.01)*
***G01N 21/64*** *(2006.01)*    ***G02B 21/00*** *(2006.01)*
***G02B 21/16*** *(2006.01)*    ***G02B 21/36*** *(2006.01)*

(86) Internationale Anmeldenummer:
**PCT/EP2001/009050**

(87) Internationale Veröffentlichungsnummer:
**WO 2002/012864 (14.02.2002 Gazette 2002/07)**

(54) **VERBESSERUNG DER SPEKTRALEN UND/ODER RÄUMLICHEN AUFLÖSUNG IN EINEM LASER-SCANNING MIKROSKOP**

IMPROVEMENT OF SPECTRAL AND/OR SPATIAL RESOLUTION IN A LASER SCANNING MICROSCOPE

AUGMENTATION DE LA RESOLUTION SPECTRALE ET/OU SPATIALE DANS UN MICROSCOPE A BALAYAGE LASER

(84) Benannte Vertragsstaaten:
**AT BE CH CY DE DK ES FI FR GB GR IE IT LI LU MC NL PT SE TR**

(30) Priorität: **08.08.2000 DE 10038528**

(43) Veröffentlichungstag der Anmeldung:
**11.12.2002 Patentblatt 2002/50**

(73) Patentinhaber: **Carl Zeiss Microimaging GMBH**
**Carl-Zeiss-Promenade 10**
**07740 Jena (DE)**

(72) Erfinder:
• **WOLLESCHENSKY, Ralf**
**07743 Jena (DE)**
• **MÖHLER, Gunter**
**07745 Jena (DE)**
• **GERSTNER, Volker**
**99510 Kapellendorf (DE)**

(74) Vertreter: **Hampe, Holger**
**Carl Zeiss Jena GmbH,**
**Zentralbereich Recht und Patente,**
**Patentabteilung**
**Carl-Zeiss-Promenade 10**
**07745 Jena (DE)**

(56) Entgegenhaltungen:
EP-A- 0 320 530      DE-A- 4 017 317
DE-A- 4 307 833      DE-A- 4 327 944
DE-U- 20 008 133     US-A- 5 192 980
US-A- 6 088 097

## Beschreibung

Die Erfindung bezieht sich auf ein Verfahren und eine Anordnung in der Fluoreszenzmikroskopie, insbesondere der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierende Verfahren zum Screenen von Wirkstoffen (High Throuhput Sceening). Durch den Übergang von der Detektion von wenigen breiten spektralen Farbstoffbändern zur simultanen Aufnahme kompletter Spektren eröffnen sich neue Möglichkeiten bei der Identifikation, Separation und Zuordnung der meist analytischen oder funktionalen Probeneigenschaften zu räumlichen Teilstrukturen oder dynamischen Prozessen. Simultan-Untersuchungen von Proben mit Mehrfachfluorophoren werden damit bei überlappenden Fluoreszenzspektren auch in räumlichen Strukturen von dicken Proben möglich. Durch die Anordnung wird die spektrale und räumliche Auflösung der Detektionseinheit erhöht.

## Stand der Technik

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.

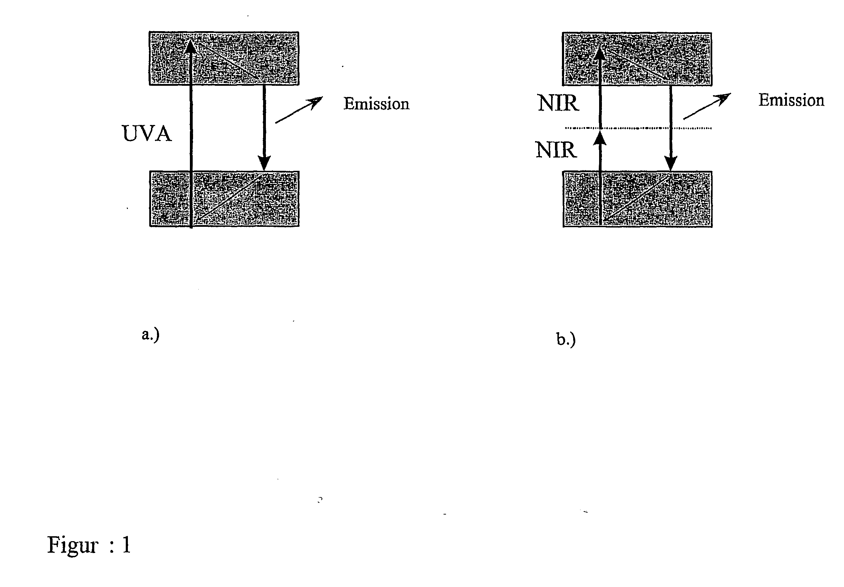

Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurück gelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.

Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbter Zellteile, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.

Neben der Anregung der Farbstoffmoleküle mit einem hochenergetischen Photon (Einphotonen-Absorption) ist auch eine Anregung mit mehreren Photonen geringerer Energie möglich (Abb. 1b). Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.

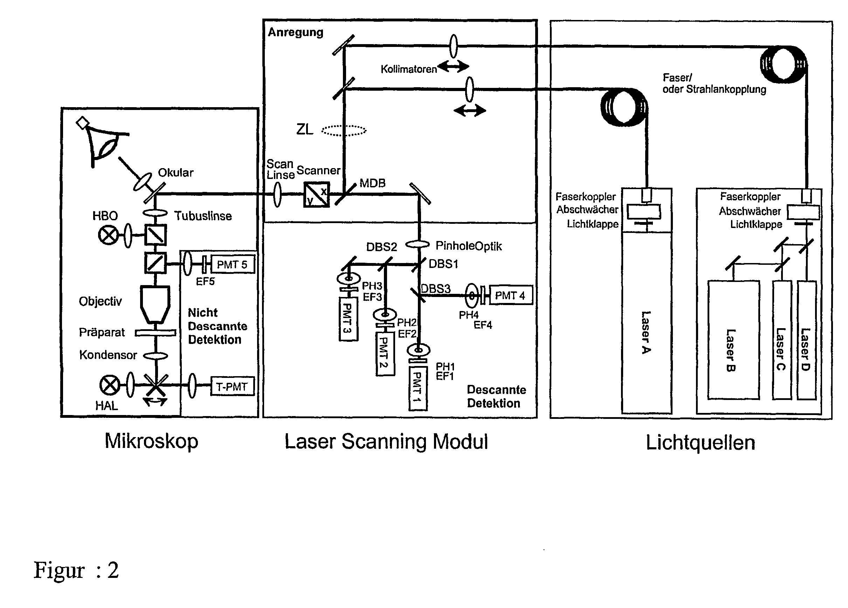

Der Stand der Technik soll im folgenden beispielhaft anhand eines konfokalen Laser-Scanning- Mikroskopes (LSM) erläutert werden (Abb. 2).

Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto optischen Kristalls. Anschließend gelangt die Laserstrahlung über eine Faser oder eine geeignete Spiegelanordnung in das Scanmodul.

Die in der Lichtquelle erzeugte Laserstrahlung wird mit Hilfe des Objektivs (2) beugungsbegrenzt über die Scanner, die Scanoptik und die Tubuslinse in das Präparat fokussiert. Der Fokus rastert punktförmig die Probe in x-y-Richtung ab. Die Pixelverweilzeiten beim Scannen über die Probe liegen meist im Bereich von weniger als einer Mikrosekunde bis zu einigen Sekunden.

Bei einer konfokalen Detektion (descanned Detection) des Fluoreszenzlichtes, gelangt das Licht das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.

Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descannte Detektion).

In einer weiteren Anordnung zur Detektion einer durch Mehrphotonenabsorption angeregten Farbstofffluoreszenz erfolgt weiterhin eine descannte Detektion, jedoch wird diesmal die Pupille des Objektives in die Detektionseinheit abgebildet (nichtkonfokal descannte Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optischer Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

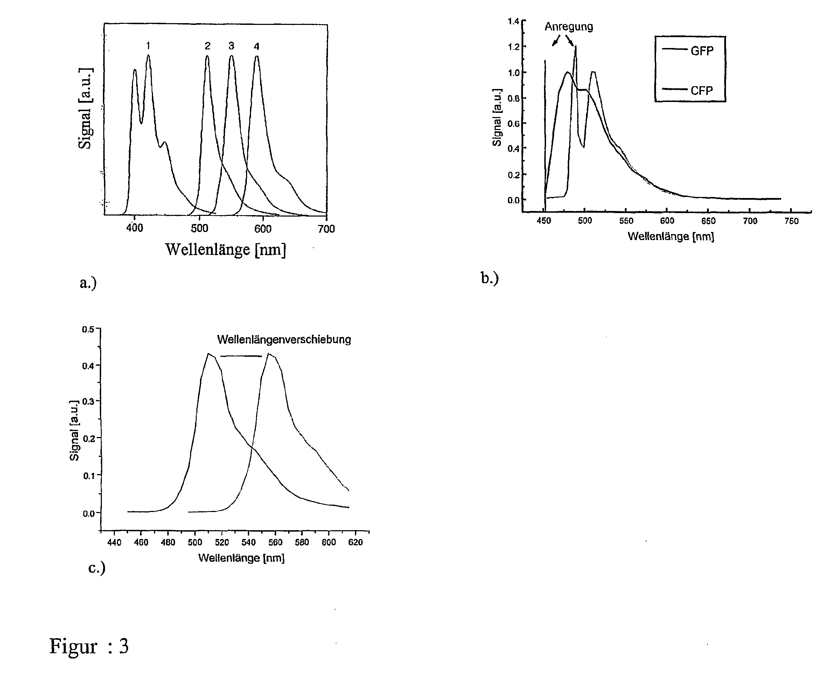

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden Abb 3a). Aufgetragen sind beispielhaft Emissionssignale in Abhängigkeit von der Wellenlänge für verschiedene Farbstoffe (1-4). Zum getrennten Nachweis erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in verschiedenen Punktdetektoren (PMT x). Eine flexible Anpassung der Detektion und der Anregung an entsprechende neue Farbstoffeigenschaften durch den Anwender ist mit der oben beschriebenen Anordnung nicht möglich. Statt dessen müssen für jeden (neuen) Farbstoff neue dichroitische Strahlteiler und Blockfilter kreiert werden. In einer Anordnung gemäß WO9507447 wird das Fluoreszenzlicht mit Hilfe eines Prismas spektral aufgespalten. Das Verfahren unterscheidet sich von der oben beschriebenen Anordnung mit dichroitischen Filtern nur dadurch, dass der verwendete Filter in seiner Charakteristik einstellbar ist. Es werden jedoch weiterhin pro Punktdetektor vorzugsweise das Emissionsband eines Farbstoffs aufgezeichnet.

Eine schnelle lokale Messung des Emissionsspektrums ist mit beiden Anordnungen nur bedingt möglich, da die Einstellung des Emissionsbereiches auf mechanischen Bewegungen des dichroitischen Filters bzw. von Blenden beruht und somit die maximale spektrale Auflösung auf einige 5nm begrenzt ist. Eine hohe spektrale Auflösung wird z.B. dann benötigt wenn sich die Emissionsspektren wie in Abb. 3b dargestellt überlagern. Abb. 3b zeigt ein solches Verhalten von zwei in der Natur vorkommenden Farbstoffen CFP und GFP. Diese Farbstoffe sind zur Untersuchung von Lebendpräparaten besonders geeignet da sie keine toxischen Wirkungen auf die zu untersuchenden Proben ausüben.

Ist die Lage des Emissionsspektrums der verwendeten Farbstoffe unbekannt oder tritt eine von der Umgebung abhängige Verschiebung des Emissionsspektrums (Abb. 3c) auf, so ist eine hochaufgelöste Detektion der Farbstofffluoreszenzen notwendig. Die Wellenlängenverschiebung kann bis zu mehreren 10 nm betragen. Zur Vermessung des Emissionsspektrums in der Probe werden heutzutage Spektrometer auch in Verbindung mit einem LSM eingesetzt. Hierbei wird statt eines Punktdetektors ein herkömmliches meist hochauflösendes Spektrometer eingesetzt (Patent Dixon, et al. US 5,192,980). Diese können jedoch nur punktuell oder gemittelt über ein Gebiet ein Emissionsspektrum aufzeichnen. Es handelt sich also um eine Art der Spektroskopie. Zusätzlich wird das zumeist schwache Fluoreszenzsignal der Probe auf eine große Anzahl von Einzelkanälen im Spektrometer (meist 512 oder 1024 Einzelkanäle) verteilt bzw. wird ein schmales Fluoreszenzband entsprechend der spektralen Auflösung detektiert. Deshalb ist das Signal pro Einzelkanal äußerst gering und unter Umständen nicht mehr detektierbar.

DE-A-4327944 beschreibt einen zweidimensionalen Bilddetektor mit einem Maskenschieber für eine Maske vor einem Matrixsensor. US6088097 beschreibt ein punktscannendes LSM mit spetraler Aufspaltung durch ein dispersives Element im Detektionsstrahlengang. DE4017317A beschreibt ein Spektrometer mit zu einem Spektrum bewegten Zeilendetektor. EP0320530 beschreibt ein Spektrometer mit einem zu einem Detektor verschiebbaren Spektrum.

Statt eines Punktscanners werden nach dem Stand der Technik auch so genannte Linienscanner verwendet (Lit.: Corle, Kino; "Confocal Scanning Optical Microscopy and Related Imaging Systems"; Academic Press 1996). Der prinzipielle Aufbau entspricht im wesentlichen dem eines LSM nach Abb. 2. Jedoch wird statt eines Punktfokus eine Linie in den Fokus abgebildet und die zu untersuchende Probe nur noch in einer Richtung gescannt. Als konfokale Blende dient in einem solchen Aufbau statt einer Lochblende eine Schlitzblende. Eine nicht descannte Detektion bei Verwendung einer Mehrphotonen-Absorption kann auch mit dieser Anordnung erfolgen. Hierzu kann wiederum die konfokale Blende entfallen. Zur Detektion wird meist eine CCD-Zeile mit 1024 oder mehr Bildpunkten eingesetzt. Durch das Scannen einer Linie anstatt eines Punktes kann die Bildaufnahmerate erheblich vergrößert werden. Somit kann dieses Scanverfahren zur Beobachtung von schnell ablaufenden Prozessen in Echtzeit verwendet werden.

Nachteilig bei den Verfahren nach dem Stand der Technik ist, dass der Zeilendetektor üblicherweiser sequentiell ausgelesen werden muss, wodurch sich bei schnellen Ausleseraten ein erhöhtes Ausleserauschen ergeben kann.

Aufgabe der Erfindung sind daher neue Methoden zur effizienten und spektral und räumlich hochaufgelösten Detektion von Fluoreszenzfarbstoffen. Diese Methoden sollen in bildgebenden wie in analytischen Mikroskopiersystemen eingesetzt werden können. Die Mikroskopsysteme sind bildgebende Systeme wie Laser-Scanning-Mikroskope zur dreidimensionalen Untersuchung von biologischen Präparaten mit einer optischen, räumlichen Auflösung bis zu 200 nm, Scanning-Nahfeld-Mikroskope zur hochaufgelösten Untersuchung von Oberflächen mit einer Auflösung von bis zu 10 nm.

Fluoreszenzkorrelations-Mikroskope zur quantitativen Bestimmung von Molekülkonzentrationen und zur Vermessung von Molekül-Diffusionen. Weiterhin sind auf Fluoreszenzdetektion basierende Verfahren zum Screenen von Farbstoffen eingeschlossen. In all den o. g. Systemen werden Fluoreszenzfarbstoffe zur spezifischen Markierung der Präparate eingesetzt. Die o. g. Aufgabe wird durch ein Verfahren und eine Anordnung gemäß den unabhängigen Patentansprüchen gelöst.

Bevorzugte Weiterbildungen sind Gegenstand der abhängigen Ansprüche.

## Kurze Beschreibung der Abbildungen

Figur 1a: Schematische Darstellung der Einphotonen-Absorption
Figur 1b: Schematische Darstellung der Mehrphotonenabsorption.
Figur 2: Aufbau eines konfokalen Laser-Scanning-Mikroskops (Stand der Technik).
Figur 3a: Typische Spektren von Farbstoffen.
Figur 3b: Typische Spektren fluoreszierender Proteine.
Figur 3c: Wellenlängenverschiebung in Abhängigkeit von der Umgebung.
Figur 4: Blockschaltbild Aufbau Detektoreinheit / Optik.
Figur 5: Beispiel Aufbau Detektoreinheit / Optik.
Figur 6: Blockschaltbild Aufbau Detektoreinheit / Optik für Linienscanner.
Figur 7: Beispiel Aufbau Detektoreinheit / Optik für Linienscanner.
Figur 8a-c: Schaltelemente.
Figur 9: Algorithmus Pixelshift (oben) und errechnete Sub-Pixel (unten)
Figur 10: Abhängigkeit der Detektorauflösung von der Anzahl der Verschiebungen.
Figur 11: Beispiel Aufbau der Elektronik.
Figur 12: Anwendungen des erfindungsgemäßen Verfahrens.

## Beschreibung der Erfindung

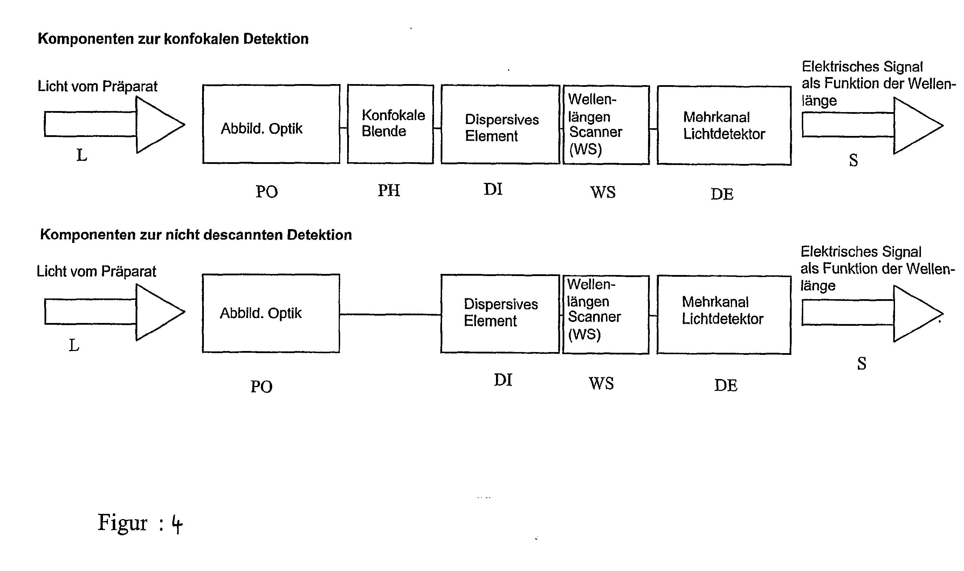

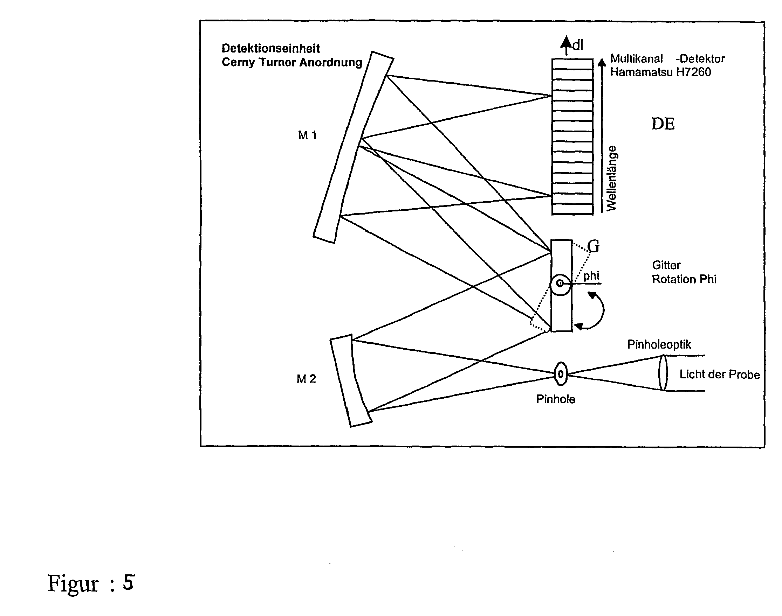

Hintergrund des erfindungsgemäßen Verfahrens ist eine spektral aufgespaltete Detektion der Fluoreszenz. Dazu wird das Emissionslicht im Scanmodul oder im Mikroskop (bei Mehrphotonen-Absorption) mit Hilfe eines Elementes zur Trennung der Anregungsstrahlung von der detektierten Strahlung wie dem Hauptfarbteiler (MDB) oder einem AOTF gemäß 7346DE oder gemäß 7323DE vom Anregungslicht abgespalten. Bei Durchlichtanordnungen kann ein derartiges Element auch völlig entfallen. Ein Blockschaltbild der nun folgenden Detektoreinheit ist in Abb. 4 dargestellt. Das Licht L der Probe wird mit Hilfe einer abbildenden Optik PO bei konfokaler Detektion durch eine Blende (Pinhole) PH fokussiert, wodurch Fluoreszenz, die außerhalb des Fokus entstand, unterdrückt wird. Bei einer nichtdescannten Detektion entfällt die Blende. Das Licht wird nun mit Hilfe eines winkeldispersiven Elements DI in seine Spektralanteile zerlegt. Als winkeldispersive Elemente kommen Prismen, Gitter und beispielsweise akusto optische Elemente in Frage. Das vom dispersiven Element in seine spektralen Komponenten aufgespaltete Licht wird im Anschluß auf einen Zeilendetektor DE abgebildet. Dieser Zeilendetektor DE mißt also das Emissionssignal S in Abhängigkeit von der Wellenlänge und wandelt dies in elektrische Signale um. Mit Hilfe eines erfindungsgemäßen, im folgenden näher erläuterten Wellenlängenscanners WS kann die Lage des Fluoreszenzspektrums relativ zum Zeilendetektor definiert um eine Wegstrecke dl durch Verschieben des PMT in Fig. 5 oder durch Schwenkung eines Gitters oder Spiegels um einen Drehwinkel phi (Fig. 5 und weitere) verschoben werden. Zusätzlich kann der Detektionseinheit noch ein Linienfilter zur Unterdrückung der Anregungswellenlängen vorgeschaltet werden.

Eine mögliche Ausführungsform des optischen Strahlenganges der in Abb. 4 im Blockschaltbild gezeigten Detektoreinheit ist in Abb. 5 dargestellt. Der

Aufbau beschreibt im wesentlichen einen Cerny Turner Aufbau. Bei einer konfokalen Detektion wird das Licht L der Probe mit der Pinholeoptik PO durch die konfokale Blende PH fokussiert. Bei einer nichtdescannten Detektion im Falle einer Mehrphoton-Absorption kann diese Blende entfallen. Der erste abbildende Spiegel M2 kollimiert das Fluoreszenzlicht. Anschließend trifft das Licht auf ein Liniengitter G, beispielsweise ein Gitter mit einer Linienzahl von 651 Linien pro mm Das Gitter beugt das Licht entsprechend seiner Wellenlänge in verschiedene Richtungen. Der zweite abbildende Spiegel M1 fokussiert die einzelnen spektral aufgespaltenen Wellenlängenanteile auf die entsprechenden Kanäle des Zeilendetektors DE . Besonders vorteilhaft ist der Einsatz eines Zeilen-Sekundärelektronenvervielfachers der Firma Hamamatsu H7260. Der Detektor besitzt 32 Kanäle und eine hohe Empfindlichkeit. Der freie Spektralbereich der oben beschriebenen Ausführungsform beträgt etwa 350 nm. Der freie Spektralbereich wird in dieser Anordnung gleichmäßig auf die 32 Kanäle des Zeilendetektors verteilt, wodurch sich eine optische Auflösung von etwa 10 nm ergibt. Somit ist diese Anordnung nur bedingt zur Spektroskopie geeignet. Jedoch ist ihr Einsatz in einem bildgebenden System vorteilhaft, da das Signal pro Detektionskanal aufgrund des relativ breiten detektierten Spektralbandes noch relativ groß ist. Eine Verschiebung des Fluoreszenzspektrums kann durch eine Verdrehung beispielsweise des Gitters, von M1, von M2, um den Winkel phi und/oder durch eine Verschiebung des Zeilenempfängers in Richtung der Wellenlängenaufspaltung um dl erfolgen (siehe Abb). Dies entspricht einer vorteilhaften Ausführung des o.g. Wellenlängenscanners WS.

Eine weitere mögliche Ausführungsform kann die Verwendung eines Matrixdetektors (z.B. eine CCD-Matrix) beinhalten. Hierbei wird in einer Koordinate durch das dispersive Element G eine Aufspaltung in der Zeichenebene in verschiedene Wellenlängenanteile vorgenommen. In der Richtung senkrecht zur Zeichenebene auf dem Matrixdetektor wird eine komplette Zeile (oder Spalte) des gescannten Bildes abgebildet. Diese Ausführungsform ist besonders vorteilhaft beim Aufbau eines Linienscanners. Der prinzipielle Aufbau entspricht im wesentlichen dem eines LSM nach Abb. 2. Jedoch wird statt eines Punktfokus eine Linie wie gestrichelt dargestellt, beispielsweise durch eine Zylinderlinse ZL in den Fokus abgebildet und die zu untersuchende Probe nur noch in einer Richtung gescannt. Als konfokale Blende dient in einem solchen Aufbau statt einer Lochblende eine Schlitzblende. Eine nichtdescannte Detektion insbesondere bei Verwendung einer Mehrphotonen-Absorption kann auch mit dieser Anordnung wie in Fig.2 dargestellt, erfolgen. Weiterhin kann die Schlitzblende bei Mehrphotonenabsorption entfallen.

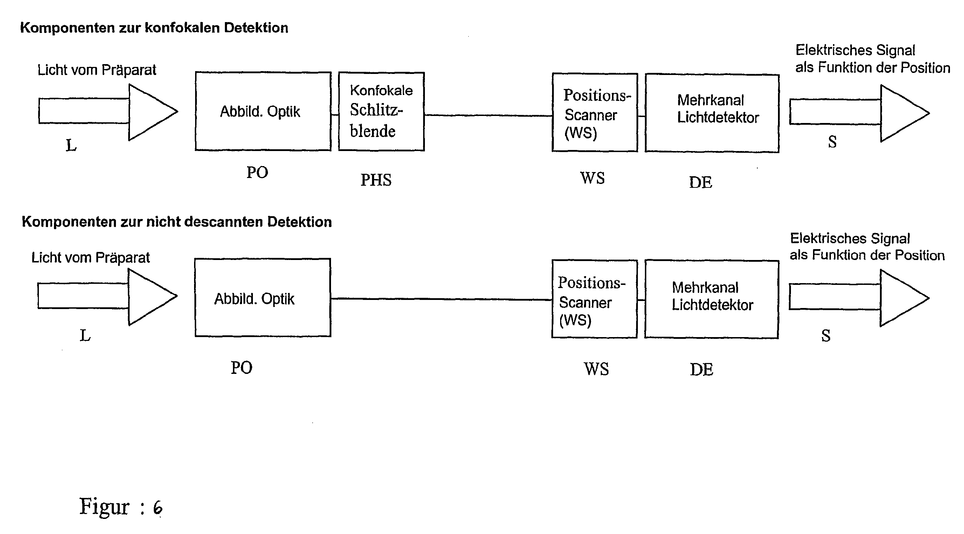

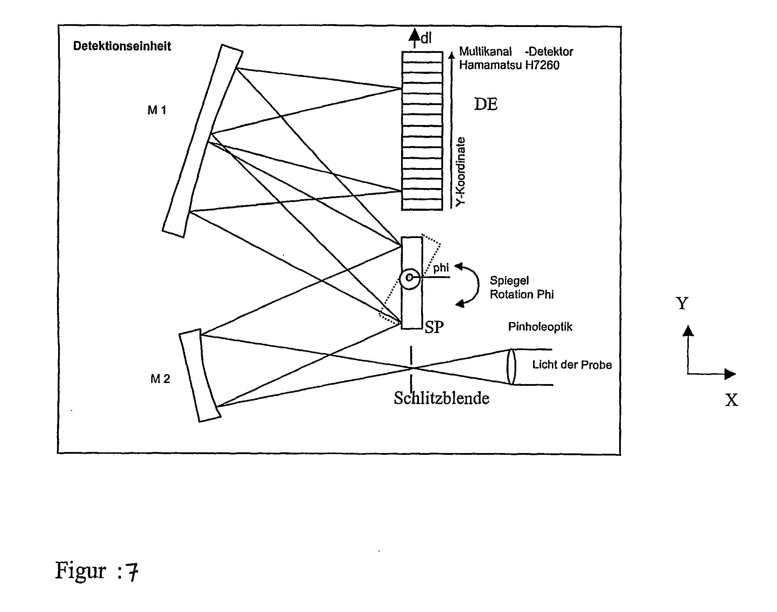

Hintergrund des Verfahrens zur Erhöhung der räumlichen Detektorauflösung vorzugsweise bei einem in Echtzeit bildgebenden Verfahren ist eine linienförmige Anregung und Detektion der Probe (Linienscanner). Das Emissionslicht wird im Scanmodul oder im Mikroskop (bei Mehrphotonen-Absorption) mit Hilfe beispielsweise des Hauptfarbteilers (MDB) vom Anregungslicht abgespalten. Ein Blockschaltbild der nun folgenden Detektoreinheit ist in Abb. 6 dargestellt. Das Licht der Probe wird mit Hilfe einer abbildenden Optik PO bei konfokaler Detektion durch eine Schlitzblende PH 1 fokussiert, wodurch Fluoreszenz, die außerhalb des Fokus entstand, unterdrückt wird. Bei einer nichtdescannten Detektion entfällt die Blende. Das Licht kann nun auch mit Hilfe eines in Fig. 7 dargestellten Spiegels SP, der sich in einer zu den Scanspiegeln x/y optisch konjugierten Ebene (Pupille der optischen Beleuchtungsanordnung) befindet, auf den Zeilendetektor DE abgebildet werden.

Hier erfolgt keine dispersive Aufspaltung sondern eine breitbandige Erfassung des Fluoreszenzlichtes mittels der Detektionseinheit, wobei die Ortsauflösung entlang der Scanlinie mittels des Detektors realisiert wird.

Mit Hilfe des Spiegels SP kann die Lage der Fluoreszenzlinie relativ zum Zeilendetektor definiert um dl verschoben werden (Positionsscanner WS). Dieser Zeilendetektor DE mißt also das Emissionssignal in Abhängigkeit von der Position, in der die Anregung in der Probe erfolgte und wandelt dies in elektrische Signale um. Zusätzlich wird vorteilhaft der Detektionseinheit noch ein (nicht dargestellter) Linienfilter zur Unterdrückung der Anregungswellenlängen vorgeschaltet. Weiterhin ist eine Aufspaltung der Fluoreszenzsignale verschiedener Farbstoffe mit entsprechenden dichroitischen Filtern nach dem Stand der Technik und eine getrennte Detektion der Fluoreszenzsignale mit verschiedenen Detektionseinrichtungen Teil dieser Erfindung.

Eine mögliche Ausführungsform des optischen Strahlenganges der in Abb. 6 im Blockschaltbild gezeigten Detektoreinheit ist in Abb. 7 dargestellt. Bei einer konfokalen Detektion wird das Licht L der Probe mit der Pinholeoptik PO durch die konfokale Schlitzblende PHS fokussiert. Bei einer nichtdescannten Detektion im Falle einer Mehrphoton-Absorption kann diese Blende entfallen. Der erste abbildende Spiegel M2 kollimiert das Fluoreszenzlicht. Anschließend trifft das Licht auf einen weiteren ebenen Spiegel SP. Der Spiegel SP befindet sich in einer Pupille der optischen Beleuchtungseinrichtung und ist drehbar gelagert. Der zweite abbildende Spiegel M1 fokussiert die Scanlinie auf die entsprechenden Kanäle des Zeilendetektors DE. Besonders vorteilhaft ist der Einsatz eines Zeilen-Sekundärelektronenvervielfachers der Firma Hamamatsu H7260. Der Detektor besitzt 32 Kanäle und eine hohe Empfindlichkeit. Weiterhin ist das Signal pro Detektionskanal aufgrund des relativ breiten detektierten Linienteilstückes noch relativ groß ist. Eine Verschiebung des Scanlinie kann durch eine Verdrehung beispielsweise des Spiegels SP um eine Achse senkrecht zur Scanlinie entlang der y Koordinate am PMT und parallel zur Spiegelebene, von M1, von M2 um phi und/oder durch eine Verschiebung des Zeilenempfängers um dl erfolgen. Dies entspricht dem o.g. Positionsscanner WS. Eine nichtdescannte Detektion insbesondere bei Verwendung einer Mehrphotonen-Absorption kann auch mit dieser Anordnung wie in Fig. 2 dargestellt, erfolgen. Weiterhin kann die Schlitzblende bei Mehrphotonen-absorption entfallen.

Liegt die Scanlinie z.B. entlang der X Achse so kann der Scanner den Positionsscan WS um dl übernehmen. In diesem Falle würde der Spiegel SP in Abb. 7 fest stehen. Hierbei wird nicht die Scanlinie mittels WS relativ zum Detektor sondern vielmehr die Scanlinie in der Probe entlang der x-Achse bewegt. Beide Bewegungen sind prinzipiell gleich. Der y Scanner bewegt in diesem Falle die Linie entlang der y Achse über das Präparat. Die Funktionen der x bzw. y Achsen können auch vertauscht werden.

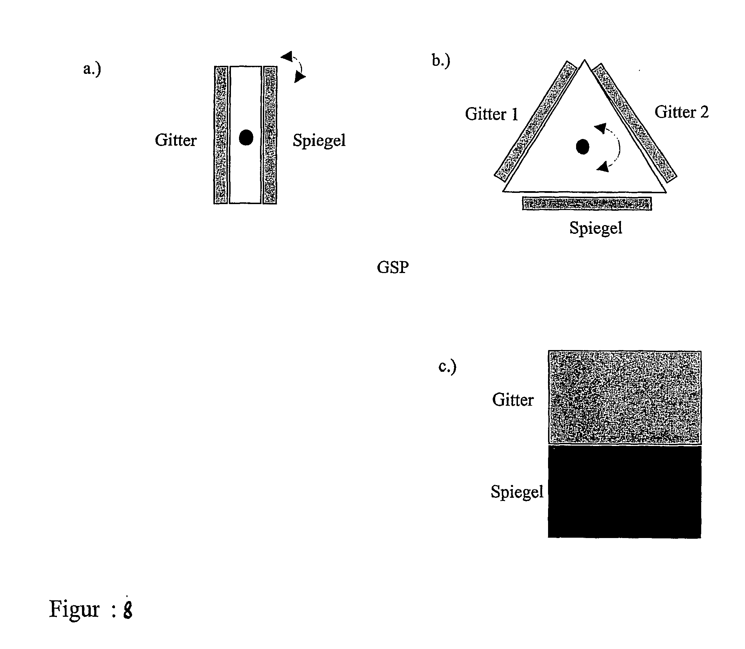

Der Vorteil der letzten Variante liegt darin, dass zwischen einem punktscannenden LSM mit hoher spektraler Auflösung (durch dispersive Aufspaltung gemäß Fig. 4 und 5) und einem linienscannenden mit geringerer spektraler Auflösung aber hoher Scangeschwindigkeit (gemäß Abs. 6 und 7) hin und her geschaltet werden kann, wobei jedesmal auf die gleiche Detektion zurückgegriffen werden kann. Dazu wird beispielsweise vorteilhaft anstatt des Spiegels bzw. des Gitters ein Schaltelement, an dem sich beide optische Elemente befinden, angebracht. Wird vom Punktscanner zum Linienscanner umgeschaltet, so wird in den Strahlengang zwischen MDB und Lasereinkopplung im Scanmodul eine Zylinderlinse ZL in Abb. 2 zur Formung einer Scanlinie eingebracht, das Pinhole zu einer Schlitzblende verändert oder ausgewechselt und der Spiegel SP eingedreht. Abb. 8 zeigt verschiedene Anordnungen zur Ausbildung des Schaltelements G/SP. Abb 8a) zeigt ein drehbares Element auf dem sich auf der Vorderseite ein Spiegel und auf der Rückseite ein Gitter befindet. Abb 8b) zeigt eine drehbare Anordnung mit 2 Gittern und einem Spiegel. Durch die Verwendung von mehreren Gittern kann die potentielle spektrale Auflösung der Detektionseinheit variiert werden. Abb 8c) zeigt eine Anordnung bei der G/SP vertikal (oder horizontal bei um 90° gedrehter Anordnung) verschoben wird und im oberen Teil mit einem Gitter und im unteren Teil mit einem Spiegel belegt wurde. Kombinationen der in Abb. 8 dargestellten Anordnungen sind uneingeschränkt Teil der Erfindung.

Eine weitere mögliche Ausführungsform kann die Verwendung eines Matrixdetektors (z.B. eine CCD, oder eine 8 x 8 PMT Matrix von Hamamatsu H7546) beinhalten. Diese Ausführungsform ist besonders vorteilhaft beim Aufbau eines spektral hoch auflösenden Echtzeit-Linienscanners. Hierzu wird wiederum statt des Spiegels SP in Abb. 7 ein Gitter verwendet, welches das Fluoreszenzlicht senkrecht zu den Gitterlinien spektral in Zeichenebene aufspaltet und entlang einer Koordinate des Matrixdetektors abbildet. In der hierzu senkrechten Richtung auf dem Matrixdetektor wird eine komplette Zeile (oder Spalte) des gescannten Bildes abgebildet. Die Scanlinie ist hierbei parallel zu den Gitterlinien ausgerichtet. Die Drehung des Gitters kann um die vertikale Achse, d.h. senkrecht zur Zeichenebene, zur Erhöhung der spektralen Detektorauflösung erfolgen. Eine zusätzliche Drehung um eine horizontale Achse, die in der Gitterebene und senkrecht zu den Gitterlinien liegt, kann der Erhöhung der räumlichen Detektorauflösung dienen, indem mittels der Schwenkung des Gitters die Scanlinie über den Detektor bewegt wird.

Liegt die Scanlinie z.B. entlang der X Achse so kann der x-Scanner den Positionsscan WS um dl übernehmen. In diesem Falls würde das Gitter in Abb. 7 in seiner horizontalen Verkippung vorzugsweise fest stehen. Der y Scanner bewegt in diesem Falle die Scanlinie entlang der y Achse über das Präparat. In einer weiteren Ausführungsform kann auch das Gitter in seiner horizontalen und seiner vertikalen Verkippung fest stehen. Der Positionsscan zur Erhöhung der räumlichen Auflösung erfolgt weiterhin durch den x-Scanner. Eine Erhöhung der spektralen Detektorauflösung wird in diesem Falle nicht durchgeführt. Die Funktionen der x bzw. y Achsen können auch vertauscht werden.

Die spektrale bzw. räumliche Auflösung ist bei den oben dargestellten optischen Anordnungen durch die Größe und Anzahl der Einzelkanäle festgelegt. In den oben beschriebenen Ausführungsformen detektiert jeder Einzelkanal ein Spektralband des Emissionsspektrums mit einer spektralen Breite von ca. 10 nm. Hingegen beträgt die potentielle spektrale Auflösung der Spektrometeranordnung ($\Delta\lambda$) aufgrund des verwendeten Gitters 1.5 nm. Bei Anwendung der oben beschriebenen Anordnungen in einem Linienscanner detektiert jeder Einzelkanal bei einer geforderten Pixelauflösung von beispielsweise 512 Pixeln die Summe von 512/32=16 Einzelbildpunkten.

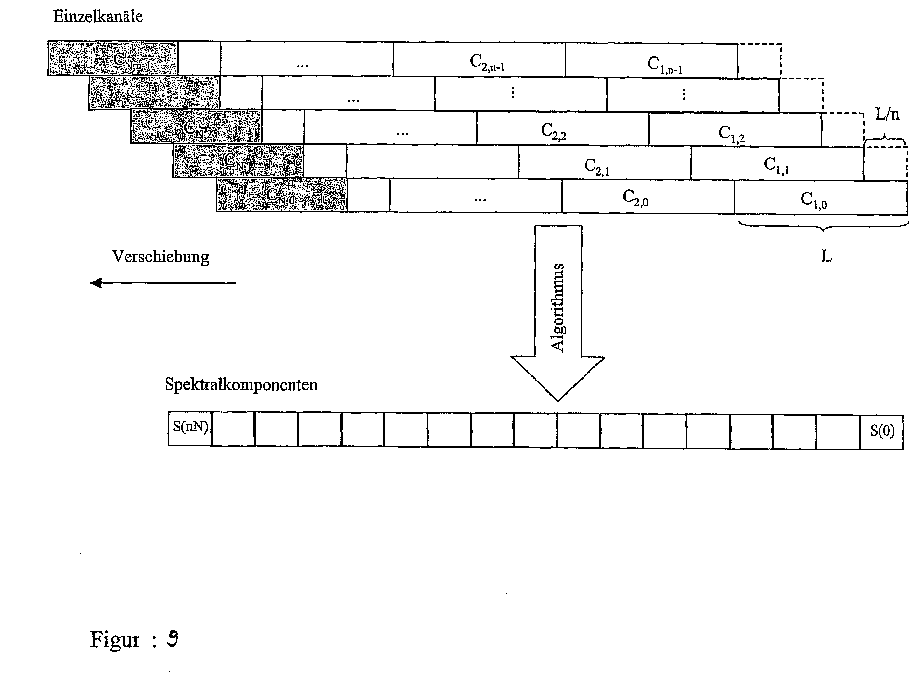

Um die spektrale bzw. räumliche Auflösung der Detektionseinheit um einen Faktor n zu erhöhen, wird das Fluoreszenzspektrum bzw. die Scanlinie in n Schritten um jeweils ein Vielfaches von Un, wobei L der Breite eines Einzelkanals entspricht, verschoben. Abb. 9 zeigt schematisch jeweils in einer Zeile die verschiedenen Einzelkanäle des Zeilendetektors, denen N Einzelsignale C entsprechen. Für den oben erwähnten Zeilendetektor H7260 ist N =32. In Richtung der dl-Achse sind verschiedene Stellungen des detektierten Signales (Emissionsspektrum bzw. Scanlinie) als Funktion des oben beschriebenen Wellenlängen- bzw. Positonsscanners dargestellt. Eine Verschiebung (entspricht WS) des Fluoreszenzspektrums bzw. der Scanlinie kann, wie oben bereits erwähnt, durch eine Drehung des Gitters bzw. des Spiegels um einen Winkel phi oder durch Verschiebung dl des Detektors erfolgen.

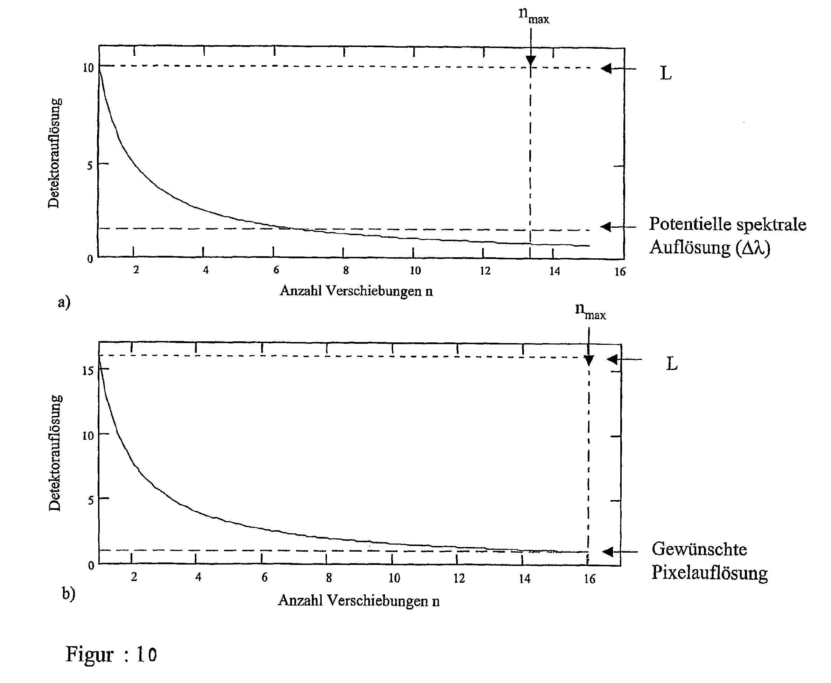

Die gemessenen Signale der Einzelkanäle werden mit $c_{k,j}$ (in Abb. 10 als Blöcke dargestellt) bezeichnet, wobei $k = 1..N$ die Kanalnummer und $j = 0..n-1$ die Vielfachen der Verschiebung Un sind. Fällt das Signal am Rand des Detektors nicht ab, so kann wie in Abbildung 10 grau dargestellt, der letzte Einzelkanal des Detektors so abgedeckt (ausgeblendet) werden, dass nur eine Breite von Un zur Messung zur Verfügung steht. Dies ist zur Vermeidung von Artefakten bei der Berechnung notwendig. Zur Berechnung der N mal n Spektralwerte $S_m$ werden nun Differenzen von Summen über Einzelkanäle nach folgendem Algorithmus gebildet:

$$S_1 = c_{1,0}{}' = \sum_{i=1}^{N} c_{i,0} - \sum_{i=1}^{N-1} c_{i,1}$$

$$S_2 = c_{1,1}{}' = \sum_{i=1}^{N} c_{i,1} - \sum_{i=1}^{N-1} c_{i,2}$$

....

$$S_{n-1} = c_{1,n-2}{}' = \sum_{i=1}^{N} c_{i,n-2} - \sum_{i=1}^{N-1} c_{i,n-1}$$

$$S_n = c_{1,n-1}{}' = \sum_{i=1}^{N-1} c_{i,n-1} - \sum_{i=2}^{N} c_{i,0} - \sum_{m=1}^{n-2} c_{N,m}$$

....

$$S_{k \cdot n+1} = c_{k,0}{}' = \sum_{i=k}^{N} c_{i,0} - \sum_{i=k}^{N-1} c_{i,1}$$

$$S_{k \cdot n+2} = c_{k,1}{}' = \sum_{i=k}^{N} c_{i,1} - \sum_{i=k}^{N-1} c_{i,2}$$

....

$$S_{k \cdot n+j+1} = c_{k,j}{}' = \sum_{i=k}^{N} c_{i,j} - \sum_{i=k}^{N-1} c_{i,j+1}$$

....

$$S_{(k+1) \cdot n-1} = c_{k,n-2}{}' = \sum_{i=k}^{N} c_{i,n-2} - \sum_{i=k}^{N-1} c_{i,n-1}$$

$$S_{(k+1) \cdot n} = c_{k,n-1}{}' = \sum_{i=k}^{N-1} c_{i,n-1} - \sum_{i=k+1}^{N-1} c_{i,0} - \sum_{m=1}^{n-2} c_{N,m}$$

....

$$S_{N \cdot n-n} = c_{N,0}{}' = c_{N,0}$$

7

$$S_{N \cdot n - n + 1} = c'_{N,1} = c_{N,1}$$

....

$$S_{N \cdot n} = c'_{N,n-1} = c_{N,n-1}$$

Die so berechneten Spektralwerte bzw. Positionswerte S (Zwischenwerte) können im Anschluß graphisch auf dem angezeigten Bild, z.B. während eines Spektralscans dargestellt werden.

Abb. 10a) zeigt die Abhängigkeit der Detektorauflösung von der Anzahl der Verschiebungen n anhand der oben beschriebenen Spektrometeranordnung. Für n=1 ist die spektrale Auflösung der Detektionseinheit gleich der spektralen Auflösung eines Einzelkanals (L), also etwa 10 nm. Für eine 5 malige Wellenlängenverschiebung um L/5 beträgt die spektrale Auflösung der Detektionseinheit 2 nm. Die maximal erreichbare spektrale Auflösung wird durch die Anzahl der Linien des eingesetzten Gitters bestimmt. Diese maximale spektrale Auflösung ($\Delta\lambda$) wird entsprechend dem Abtasttheorem nach Nyquist genau dann erreicht, wenn die Detektorauflösung gleich der halben potentiellen Auflösung der Spektrometeranordnung ($\Delta\lambda$) ist. Dies entspricht einer Anzahl:

$$n_{\max} = 2 \cdot \frac{L}{\Delta\lambda}$$

und beträgt in diesem Falle $n_{\max}$=13. Ist die Anzahl der Verschiebungen größer als $n_{\max}$ so werden die Spektralkomponenten zu häufig abgetastet und es ergibt sich kein weiterer Auflösungsgewinn. Ist n kleiner als $n_{\max}$ so werden zu wenige Spektralkomponenten abgetastet und die Auflösung der Detektionseinheit wird durch den Detektor festgelegt.

Abb. 10b.) zeigt die Abhängigkeit der räumlichen Detektorauflösung von der Anzahl der Verschiebungen. Man erkennt, dass bei einer 16 maligen Positionsverschiebung in einem Linienscanner und einem 32 kanaligen Detektor die gleiche Auflösung erzielt wird, wie bei Verwendung eines Zeilendetektors mit 512 Bildpunkten. Dabei wurde die Bildaufnahmerate gegenüber dem Punktscanner bei gleicher Bildgröße und einer konstanten Integrationszeit pro Bildpunkt um einen Faktor 32 erhöht.

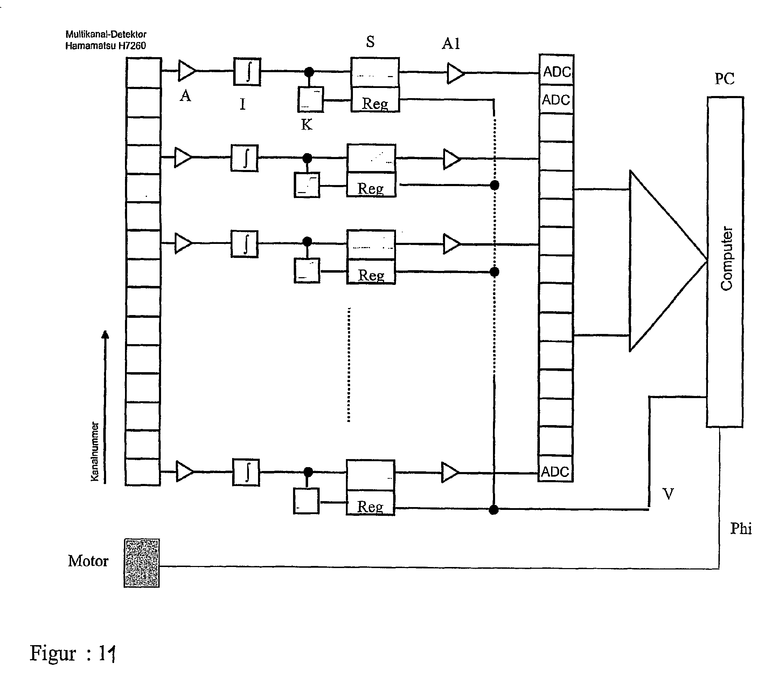

Eine Anordnung zum Auslesen der Einzelkanäle $c_{k,j}$ in Abhängigkeit vom Drehwinkel phi des Gitters bzw. des Spiegels ist in Abb._11 schematisch dargestellt. Hierbei wird der an den Anoden des PMT fließende Strom, jeweils durch den ersten Amplifier A (als Strom-Spannungswandler geschaltet) in eine Spannung gewandelt und verstärkt. Die Spannung wird einem Integrator I zugeführt der über eine entsprechende Zeit (z.B. Pixelverweilzeit) das Signal integriert.

Zur schnelleren Auswertung kann dem Integrator I ein Komparator K nachgeschaltet werden, der als einfacher Komparator eine Schaltschwelle hat, die bei Überschreitung ein digitales Ausgangssignal erzeugt oder der als Fensterkomparator ausgebildet ist und dann ein digitales Ausgangssignal bildet, wenn sich das Eingangssignal zwischen der oberen und unteren Schaltschwelle befindet oder wenn das Eingangssignal außerhalb (unter oder über) den Schaltschwellen liegt. Die Anordnung des Komparators bzw. des Fensterkomparators kann sowohl vor dem Integrator als auch danach erfolgen. Schaltungsanordnungen ohne Integrator (so genannte Verstärkermode) sind ebenfalls denkbar. Bei der Anordnung im Verstärkermode wird der Komparator K weiterhin nach entsprechender Pegelanpassung verwendet. Der Ausgang des Komparators K dient als Steuersignal für ein Switch-Register Reg, das direkt die aktiven Kanäle schaltet (online) oder der Zustand wird dem Computer über eine zusätzliche Verbindung V mitgeteilt, um eine individuelle Auswahl der aktiven Kanäle zu treffen (off-line). Das Ausgangssignal des Integrators I wird direkt einem weiteren Ampl. A1 zur Pegelanpassung, für die nachfolgende A/D-Wandlung AD zugeführt. Die AD gewandelten Werte werden über geeignete Datenübertragung an einen Rechner (PC oder Digital-Signal-Prozessor DSP) übertragen.

Eine Änderung des Drehwinkels phi bzw. der Verschiebung dl kann bildweise nach der Aufnahme oder während des Scannens eines Bildpunktes bzw. einer Bildzeile / -spalte erfolgen Die mechanischen Anforderungen an die Scangeschwindigkeit des Wellenlängen- bzw. Positionsscanners (WS) hängen von der Art der Einstellung des Drehwinkels ab. Erfolgt beispielsweise eine bildpunktweise Erhöhung der spektralen oder räumlichen Detektorauflösung so muß der Scan innerhalb der Integrationszeit für diesen Bildpunkt erfolgen (also in einigen Mikrosekunden). Erfolgt die Erhöhung der Detektorauflösung bildweise so muß die Scan innerhalb von einigen Millisekunden bis Sekunden erfolgen. Die Abfolge der Einstellung des Drehwinkels kann beispielsweise bei einer 5 maligen Verschiebung in der Reihenfolge von j=0,2,4,3,1 erfolgen. In diesem Falle wird um j*L/5 (bezogen auf die Ausgangsposition für j=0) verschoben. Diese Reihenfolge hat den Vorteil, dass Zwischenwerte schon nach der Aufnahme der Einzelkanäle für j=0,2 und 4 berechnet und dargestellt werden können. Im Anschluß werden dann die verbleibenden Einzelkanäle für j=1,3 gemessen und die restlichen Zwischenwerte berechnet und damit die Meßkurve in ihrer Auflösung weiter schrittweise verfeinert.

In einer weiteren Anordnung nach Abb. 11 erfolgt eine Manipulation bzw. Verzerrung der Eingangssignale der Einzeldetektionskanäle durch: eine Veränderung der Verstärkung von A, eine Veränderung der Integrationszeiten von I, durch ein Einspeisen eines zusätzlichen Offsets vor dem Integrator und/oder durch eine digitale Beeinflußung der gezählten Photonen bei einer Photonenzählanordnung.

In der oben beschriebenen Anordnung wurde eine Integratorschaltung zur Detektion der Einzelkanalsignale verwendet. Uneingeschränkt kann jedoch auch eine Photonenzählung in den Einzelkanälen erfolgen.

Der o.g. Zeilen- bzw. Matrixdetektor von Hamamatsu besitzt zwischen den aneinander grenzenden Einzelkanälen Stege mit einer Breite von 0.2 mm. Diese Stege wirken sich negativ auf den Berechnungsalgorithmus und auf die Effizienz der Detektionseinrichtung aus. Zur Vermeidung dieses Effektes kann ggf. vor dem Zeilen- bzw. Matrixdetektor ein Mikrolinsenarray nach dem Stand der Technik angeordnet werden. Dieses Linsenarray fokussiert zusätzlich das ankommende Licht auf die aktiven Bereichen (Einzelkanäle) des Zeilen- bzw. Matrixdetektors. Weiterhin wird das Übersprechen zwischen angrenzenden Einzelkanälen minimiert.

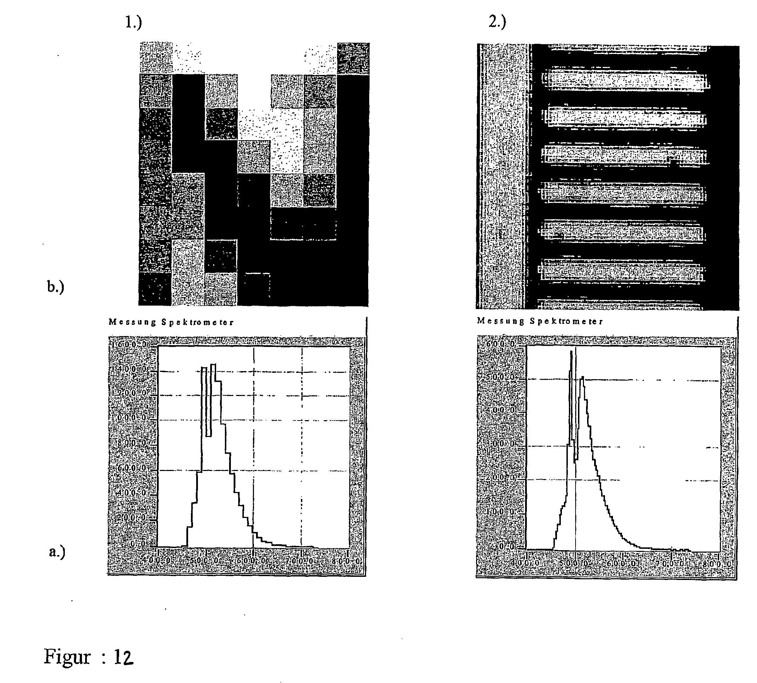

In Abb. 12 sind 2 Anwendungen des erfindungsgemäßen Verfahren dargestellt. Abb. 12a1) zeigt die Aufnahme eines Fluoreszenzspektrums mit der Spektrometeranordnung ohne Einsatz des Verfahrens zur Erhöhung der Detektorauflösung und Abb. 12a2) zeigt das Spektrum des gleichen Farbstoffes jedoch diesmal unter Verwendung des Verfahrens. Deutlich ist die Erhöhung der spektralen Auflösung an der Trennung der Laserlinie von der Fluoreszenz sichtbar.

In Abb. 12b1) ist das Bild eines Strichgitters mit dem 32 Kanal-Detektor gemessen worden. Die Struktur des Gitters ist aufgrund der geringen räumlichen Auflösung der Detektor nur schwer erahnbar. Abb. 12b2) zeigt den gleichen Bildausschnitt jedoch diesmal aufgenommen mit dem Verfahren zur Erhöhung der räumlichen Auflösung der Detektionseinheit. Die Strukturen sind gut unterscheidbar.

**Patentansprüche**

1.  Verfahren zur optischen Erfassung von charakteristischen Größen einer beleuchteten Probe in einem Laser-Scanning-Mikroskop,

    wobei eine von der Probe rückgestreute, reflektierte und/oder fluoreszierte und/oder transmittierte Strahlung mit einem ortsauflösenden Detektor detektiert wird, indem die von der Probe kommende Strahlung auf den Detektor abgebildet wird und

    wobei eine spektral aufgelöste Messung der von der Probe kommenden Strahlung über ein dem Detektor vorgeordnetes dispersives Element erfolgt,

    **dadurch gekennzeichnet,**
    **dass** die Lage der ortsaufgelöst gemessenen Strahlung relativ zum Detektor verschoben wird, wobei die Schrittgröße der Verschiebung unterhalb des Rastermaßes der Ortsauflösung des Detektors liegt, und mittels eines Algorithmus aus den bei verschiedenen Verschiebungen gemessenen Signalen Zwischenwerte zum Zwecke der Erhöhung der Ortsauflösung des Detektors ermittelt werden und die so berechneten Zwischenwerte graphisch auf einem angezeigten Bild dargestellt werden.

2.  Verfahren nach Anspruch 1, wobei eine Verschiebung des Detektors in Richtung seiner Ortsauflösung und/ oder eine Verschiebung oder Verschwenkung eines abbildenden Elementes in mindestens einer Achse und / oder eines reflektiven Elementes in mindestens einer Achse und/ oder eines dispersiven Elementes in mindestens einer Achse erfolgt.

3.  Verfahren nach Anspruch 2, wobei bei feststehendem dispersiven Element in mindestens einer seiner Schwenkachsen die räumlich verändernde Wirkung der Schwenkung in dieser Achse durch eine Scaneinheit und/oder Verschiebung des Detektors erfolgt.

4.  Verfahren nach Anspruch 2, wobei bei einem Linienscanner zur Echtzeitmikroskopie eine Verschiebung durch einen um mindestens eine Achse schwenkbaren Spiegel und/ oder eine Verschiebung des Detektors und / oder einen Spiegel einer Scanspiegelanordnung erfolgt.

5.  Verfahren nach Anspruch 2, wobei bei feststehendem Spiegel eine Schwenkung durch eine Scaneinheit und/ oder Verschiebung des Detektors erfolgt.

6.  Verfahren nach Anspruch 4, wobei zwischen einem Linienscan und einer dispersiven Aufspaltung umgeschaltet wird.

**7.** Verfahren nach einem der Ansprüche 1-6, wobei das dispersive Element zur Erhöhung der spektralen Auflösung verschwenkt wird und weiterhin eine zusätzliche Bewegung des Detektors und / oder einer Scaneinheit erfolgt.

**8.** Verfahren nach einem der Ansprüche 1-7,
wobei die Signale von Detektionskanälen gewandelt und digital ausgelesen werden und die Berechnung des Algorithmus digital in einem Rechner erfolgt.

**9.** Verfahren nach einem der Ansprüche 1-8, wobei die Signale der Detektorkanäle durch eine nichtlineare Verzerrung der Eingangssignale beeinflußt werden.

**10.** Verfahren nach Anspruch 9,
wobei eine Beeinflussung von Integrationsparametern erfolgt.

**11.** Verfahren nach Anspruch 9,
wobei eine Beeinflussung der Kennlinie eines Verstärkers erfolgt.

**12.** Verfahren nach einem der Ansprüche 1-11,
wobei die berechneten Zwischenwerte und/ oder detektierten Signale zur Generierung eines Bildes verwendet werden.

**13.** Verfahren nach Anspruch 12,
wobei ein farbkodiertes Fluoreszenzbild erzeugt wird.

**14.** Verfahren nach Anspruch 12 oder 13,
wobei eine Überlagerung mit weiteren Bildern erfolgt.

**15.** Verfahren nach einem der Ansprüche 1-14,
wobei über Komparatoren in Detektionskanälen ein Vergleich des gemessenen Signals mit einem Referenzsignal erfolgt und im Falle einer Unterschreitung und/oder Überschreitung des Referenzsignals eine Veränderung der Betriebsweise des Detektionskanales erfolgt.

**16.** Verfahren nach Anspruch 15,
wobei eine Abschaltung und/oder Nichtberücksichtigung des jeweiligen Detektionskanals erfolgt.

**17.** Verfahren nach einem der Ansprüche 1-16,
wobei die Signale der Detektionskanäle jeweils mittels mindestens einer Integratorschaltung generiert werden.

**18.** Verfahren nach einem der Ansprüche 1- 16,
wobei die Signale der Detektionskanäle mittels Photonenzählung und anschließender Digital/Analogwandlung generiert werden.

**19.** Verfahren nach Anspruch 18,
wobei die Photonenzählung zeitkorreliert erfolgt.

**20.** Verfahren nach einem der Ansprüche 1-19, **gekennzeichnet durch** die Verwendung zur optischen Erfassung von charakteristischen Größen des wellenlängenabhängigen Verhaltens einer beleuchteten Probe, insbesondere des Emissions - und/oder Absorptionsverhaltens, vorzugsweise der Fluoreszenz und/ oder Lumineszenz und/ oder Phosphoreszenz und/oder enzymaktivierten Lichtemission und/oder enzymaktivierten Fluoreszenz.

**21.** Verfahren nach einem der Ansprüche 1-19, **gekennzeichnet durch** die Verwendung zur Unterscheidung von verschiedenen Farbstoffen und/ oder
zur Bestimmung der lokalen Farbstoff-Zusammensetzung eines Bildpunktes bei Verwendung von mehreren Farbstoffen simultan und/oder
zur Bestimmung der lokalen Verschiebung des Emissionsspektrums in Abhängigkeit von der lokalen Umgebung an den der/die Farbstoffe gebunden sind und/oder
zur Vermessung von Emissionsratiofarbstoffen zur Bestimmung von Ionenkonzentrationen.

**22.** Verfahren nach einem der Ansprüche 1-19, **gekennzeichnet durch** die Verwendung zur Unterscheidung von verschiedenen Farbstoffen und/ oder

zur Bestimmung der lokalen Farbstoff-Zusammensetzung eines Bildpunktes bei Verwendung von mehreren Farbstoffen simultan und/oder

zur Bestimmung der lokalen Verschiebung des Absorptionsspektrums in Abhängigkeit von der lokalen Umgebung an den der/die Farbstoffe gebunden sind und/oder

zur Vermessung der Absorptionsratio zur Bestimmung von Ionenkonzentrationen.

23. Verfahren nach einem der Ansprüche 1-19, **gekennzeichnet durch** die Verwendung zur Erfassung von Ein- und/ oder Mehrphotonenfluoreszenz und/ oder **durch** entangled photon angeregter Fluoreszenz.

24. Verfahren nach einem der Ansprüche 1-19, **gekennzeichnet durch** die Verwendung zur parallelen Beleuchtung und Detektion, vorzugsweise im Wirkstoffscreening, wobei die Probe vorzugsweise eine Mikrotiterplatte ist.

25. Verfahren nach einem der Ansprüche 1-19, **gekennzeichnet durch** die Verwendung zur Detektion in einem Scanning-Nahfeldmikroskop.

26. Verfahren nach einem der Ansprüche 1-19, **gekennzeichnet durch** die Verwendung zur Detektion einer Ein- und/ oder Mehrphotonen-Farbstofffluoreszenz in einem Fluoreszenzkorrelierten Spektroskop.

27. Laser-Scanning-Mikroskop zur optischen Erfassung von charakteristischen Größen einer beleuchteten Probe mit:

einem ortsauflösenden Detektor zur Detektion der von der Probe rückgestreuten, reflektierten und/oder fluoreszierten und/oder transmittierten Strahlung,

einem abbildenden Element zur Abbildung der von der Probe kommenden Strahlung auf den Detektor, und

einem dem Detektor zur spektral aufgelösten Messung vorgeordneten dispersiven Element,

**dadurch gekennzeichnet,**

**dass** der Detektor in Richtung seiner Ortsauflösung und/oder das abbildende Element in mindestens einer Achse und/oder ein reflektives Element in mindestens einer Achse und/oder das dispersive Element in mindestens einer Achse zur Verschiebung der Lage der ortsaufgelöst gemessenen Strahlung relativ zum Detektor verschiebbar ausgebildet ist,

wobei die Schrittgröße der Verschiebung unterhalb des Rastermaßes der Ortsauflösung des Detektors liegt, und

**dass** Mittel vorgesehen sind, um mittels eines Algorithmus aus den bei verschiedenen Verschiebungen gemessenen Signalen Zwischenwerte zur Erhöhung der Ortsauflösung des Detektors zu ermitteln und diese Zwischenwerte graphisch auf einem angezeigten Bild darzustellen.

28. Laser-Scanning-Mikroskop nach Anspruch 27, wobei
das dispersive Element um mindestens eine Achse schwenkbar ausgebildet ist.

29. Laser-Scanning-Mikroskop nach Anspruch 27,
wobei bei feststehendem dispersiven Element in mindestens einer seiner Schwenkachsen die räumlich verändernde Wirkung der Schwenkung in dieser Achse durch eine Scaneinheit erfolgt.

30. Laser-Scanning-Mikroskop nach Anspruch 27, wobei bei einem
Linienscanner zur Echtzeitmikroskopie zur Verschiebung ein um mindestens eine Achse schwenkbarer Spiegel und/ oder ein verschieblicher Detektor und / oder Spiegel einer Scannspiegelanordnung vorgesehen ist.

31. Laser-Scanning-Mikroskop nach Anspruch 27, wobei ein feststehender Spiegel und eine Scaneinheit zur Schwenkung in eine Schwenkachse vorgesehen ist.

32. Laser-Scanning-Mikroskop nach einem der Ansprüche 27-31, das zur Erfassung von Ein- und/oder Mehrphotonenfluoreszenz und/ oder durch entangled photon angeregter Fluoreszenz ausgebildet ist.

33. Laser-Scanning-Mikroskop nach einem der Ansprüche 27 - 31,
das zur parallelen Beleuchtung und Detektion, vorzugsweise im Wirkstoffscreening ,wobei die Probe vorzugsweise eine Mikrotiterplatte ist, ausgebildet ist.

34. Laser-Scanning-Mikroskop nach einem der Ansprüche 27 - 31, das als Scanning-Nahfeldmikroskop ausgebildet ist.

**35.** Laser-Scanning-Mikroskop nach einem der Ansprüche 27 - 31, das zur Detektion einer Ein- und/oder Mehrphotonen-Farbstofffluoreszenz in einem Fluoreszenzkorrelierten Spektroskop ausgebildet ist.

**36.** Laser-Scanning-Mikroskop nach einem der Ansprüche 27- 35, mit konfokaler Detektion.

**37.** Laser-Scanning-Mikroskop nach einem der Ansprüche 27 - 36, mit einem X/Y Scanner in der Beleuchtung.

**38.** Laser-Scanning-Mikroskop nach einem der Anspüche 27- 37,mit einem X/Y Scantisch.

**39.** Laser-Scanning-Mikroskop nach einem der Ansprüche 27- 38, mit nichtkonfokaler Detektion.

**40.** Laser-Scanning-Mikroskop nach einem der Anspüche 27-31, mit Hellfeldabbildung.

**Claims**

**1.** Method for optically acquiring characteristic variables of an illuminated sample in a laser scanning microsope, a reflected and/or fluoresced and/or transmitted radiation backscattered by the sample being detected with the aid of a spatially resolving detector by imaging the radiation coming from the sample onto the detector, and a spectrally resolved measurement being made of the radiation coming from the sample via a dispersive element upstream of the detector, **characterized in that** the position of the spatially resolved measured radiation is displaced relative to the detector, the step size of the displacement being below the grid size of the spatial resolution of the detector, and an algorithm being used to determine intermediate values from the signals measured for various displacements in order to increase the spatial resolution of the detector and the intermediate values thus calculated being represented graphically on a displayed image.

**2.** Method according to Claim 1, in which there occurs a displacement of the detector in the direction of its spatial resolution, and/or a displacement or pivoting of an imaging element on at least one axis, and/or of a reflective element on at least one axis, and/or of a dispersive element on at least one axis.

**3.** Method according to Claim 2, in which, given a stationary dispersive element on at least one of its pivoting axes, the spatially varying effect of the pivoting on this axis is produced by a scanning unit and/or displacement of the detector.

**4.** Method according to Claim 2, in which, given a line scanner for real time microscopy, a displacement is performed by a mirror which can be pivoted about at least one axis, and/or by a displacement of the detector, and/or by a mirror of a scanning mirror arrangement.

**5.** Method according to Claim 2, in which, given a stationary mirror, pivoting is performed by a scanning unit and/or displacement of the detector.

**6.** Method according to Claim 4, in which a switchover is made between a line scan and a dispersive splitting.

**7.** Method according to one of Claims 1-6, in which the dispersive element is pivoted in order to increase the spectral resolution and, furthermore, an additional movement of the detector and/or a scanning unit occurs.

**8.** Method according to one of Claims 1-7, in which the signals are converted by detection channels and read out digitally, and the calculation of the algorithm is performed digitally in a computer.

**9.** Method according to one of Claims 1-8, in which the signals of the detection channels are influenced by a nonlinear distortion of the input signals.

**10.** Method according to Claim 9, in which integration parameters are influenced.

**11.** Method according to Claim 9, in which the characteristic curve of an amplifier is influenced.

**12.** Method according to one of Claims 1-11, in which the calculated intermediate values and/or detected signals are used to generate an image.

**13.** Method according to Claim 12, in which a colour-coded fluorescence image is generated.

**14.** Method according to Claim 12 or 13, in which overlaying with further images occurs.

**15.** Method according to one of Claims 1-14, in which comparators in detection channels are used to compare the measured signal with a reference signal and, in the case of an under-shooting and/or overshooting of the reference signal, the operating mode of the detection channel is changed.

**16.** Method according to Claim 15, in which the respective detection channel is switched off and/or not taken into account.

**17.** Method according to one of Claims 1-16, in which the signals of the detection channels are respectively generated by means of at least one integrator circuit.

**18.** Method according to one of Claims 1-16, in which the signals of the detection channels are generated by means of photon counting and subsequent digital/analogue conversion.

**19.** Method according to Claim 18, in which the photon counting is performed in a time-correlated fashion.

**20.** Method according to one of Claims 1-19, **characterized by** its use for optically acquiring characteristic variables of the wavelength-dependent behaviour of an illuminated sample, in particular the emission and/or absorption behaviour, preferably the fluorescence and/or luminescence and/or phosphorescence and/or enzyme-activated light emission and/or enzyme-activated fluorescence.

**21.** Method according to one of the Claims 1-19, **characterized by** its use in distinguishing various dyes and/or in determining the local dye composition of a pixel given simultaneous use of a plurality of dyes, and/or in determining the local displacement of the emission spectrum as a function of the local environment with which the dye/dyes is/are associated and/or in measuring emission ratio dyes in order to determine ion concentrations.

**22.** Method according to one of the Claims 1-19, **characterized by** its use in distinguishing various dyes and/or in determining the local dye composition of a pixel given simultaneous use of a plurality of dyes, and/or in determining the local displacement of the absorption spectrum as a function of the local environment with which the dye/dyes is/are associated and/or in measuring the absorption ratio in order to determine ion concentrations.

**23.** Method according to one of Claims 1-19, **characterized by** its use in acquiring single-photon and/or multiphoton fluorescence, and/or by entangled-photon-excited fluorescence.

**24.** Method according to one of Claims 1-19, **characterized by** its use in parallel illumination and detection, preferably in active-substance screening, the sample preferably being a microtitre plate.

**25.** Method according to one of Claims 1-19, **characterized by** its use in detecting in a scanning near-field microscope.

**26.** Method according to one of Claims 1-19, **characterized by** its use in detecting a single-photon and/or multiphoton dye fluorescence in a fluorescence-correlated spectroscope.

**27.** Laser-scanning microscope for optically acquiring characteristic variables of an illuminated sample, having a spatially resolving detector for detecting the radiation backscattered, reflected and/or fluoresced and/or transmitted by the sample, an imaging element for imaging the radiation coming from the sample onto the detector, and a dispersive element arranged upstream of the detector for spectrally resolved measurement, **characterized in that** in order to displace the position of the spatially resolved measured radiation relative to the detector, the detector is designed to be displaceable in the direction of its spatial resolution, and/or the imaging element is designed to be displaceable on at least one axis, and/or a reflective element is designed to be displaceable on at least one axis, and/or the dispersive element is designed to be displaceable on at least one axis, the step size of the displacement being below the grid size of he spatial resolution of the detector, and **in that** means are provided in order to use an algorithm to determine intermediate values from the signals measured for various displacements in order to increase the spatial resolution of the detector, and to represent these intermediate values graphically on a displayed image.

**28.** Laser scanning microscope according to Claim 27, in which the dispersive element is designed to be able to pivot about at least one axis.

29. Laser scanning microscope according to Claim 27, in which, given a stationary dispersive element on at least one of its pivoting axes, the spatially varying effect of the pivoting on this axis is produced by a scanning unit.

30. Laser scanning microscope according to Claim 27, in which, given a line scanner for real time microscopy, a mirror which can be pivoted about at least one axis, and/or a displacement detector and/or a mirror of a scanning mirror arrangement are/is provided for the displacement.

31. Laser scanning microscope according to Claim 27, in which a stationary mirror and a scanning unit are provided for pivoting on a pivoting axis.

32. Laser scanning microscope according to one of Claims 27-31 which is designed to acquire single-photon and/or multiphoton fluorescence and/or entangled-photon-excited fluorescence.

33. Laser scanning microscope according to one of Claims 27-31 which is designed for parallel illumination and detection, preferably in active-substance screening, the sample preferably being a microtitre plate.

34. Laser scanning microscope according to one of Claims 27-31 which is designed as a scanning near-field microscope.

35. Laser scanning microscope according to one of Claims 27-31 which is designed to detect a single-photon and/or multiphoton dye fluorescence in a fluorescence-correlated spectroscope.

36. Laser scanning microscope according to one of Claims 27-35 with confocal detection.

37. Laser scanning microscope according to one of Claims 27-36 with an X/Y scanner in the illumination.

38. Laser scanning microscope according to one of Claims 27-37 with an X/Y scanning table.

39. Laser scanning microscope according to one of Claims 27-38 with non-confocal detection.

40. Laser scanning microscope according to one of Claims 27-31 with bright-field imaging.


## Revendications

1. Procédé pour l'enregistrement optique de grandeurs caractéristiques d'un échantillon illuminé dans un microscope à balayage laser,
dans lequel on détecte un rayonnement rétrodiffusé, réfléchi et/ou fluorescent et/ou transmis au moyen d'un détecteur à résolution spatiale, en reproduisant sur le détecteur le rayonnement provenant de l'échantillon, et
dans lequel on réalise une mesure à résolution spectrale du rayonnement provenant de l'échantillon au moyen d'un élément dispersif placé devant le détecteur,
**caractérisé en ce qu'**on décale la position du rayonnement mesuré en résolution spatiale par rapport au détecteur, la taille du pas du décalage étant inférieure à la dimension de la trame de la résolution spatiale du détecteur, et qu'on détermine des valeurs intermédiaires au moyen d'un algorithme à partir des signaux mesurés à différents décalages dans le but d'augmenter la résolution spatiale du détecteur, et qu'on représente graphiquement les valeurs intermédiaires ainsi calculées sur une image affichée.

2. Procédé selon la revendication 1, dans lequel on effectue un décalage du détecteur dans la direction de sa résolution spatiale et/ou un décalage ou basculement d'un élément de reproduction autour d'au moins un axe et/ou d'un élément réflecteur autour d'au moins un axe et/ou d'un élément dispersif autour d'au moins un axe.

3. Procédé selon la revendication 2, dans lequel avec un élément dispersif fixe autour d'au moins un de ses axes de basculement, l'effet de modification spatiale du basculement sur cet axe est effectué par une unité de balayage et/ou par un décalage du détecteur.

4. Procédé selon la revendication 2, dans lequel avec un scanner linéaire pour la microscopie en temps réel, on effectue un décalage au moyen d'un miroir basculant autour d'au moins un axe et/ou au moyen d'un décalage du détecteur et/ou au moyen d'un miroir d'un arrangement de miroirs de balayage.

**5.** Procédé selon la revendication 2, dans lequel avec un miroir fixe, on effectue un basculement au moyen d'une unité de balayage et/ou d'un décalage du détecteur.

**6.** Procédé selon la revendication 4, dans lequel on commute entre un balayage linéaire et une dissociation dispersive.

**7.** Procédé selon une des revendications 1 - 6, dans lequel on effectue un basculement de l'élément dispersif pour augmenter la résolution spectrale et de plus un mouvement supplémentaire du détecteur et/ou d'une unité de balayage.

**8.** Procédé selon une des revendications 1 - 7, dans lequel les signaux de canaux de détection sont convertis et lus numériquement et le calcul de l'algorithme s'effectue sous forme numérique dans un ordinateur.

**9.** Procédé selon une des revendications 1 - 8, dans lequel les signaux des canaux de détection sont influencés par une distorsion non linéaire des signaux d'entrée.

**10.** Procédé selon la revendication 9, dans lequel il se produit une influence provenant de paramètres d'intégration.

**11.** Procédé selon la revendication 9, dans lequel il se produit une influence sur la caractéristique d'un amplificateur.

**12.** Procédé selon une des revendications 1 - 11, dans lequel les valeurs intermédiaires calculées et/ou les signaux détectés sont utilisés pour la génération d'une image.

**13.** Procédé selon la revendication 12, dans lequel on génère une image de fluorescence codée en couleurs.

**14.** Procédé selon la revendication 12 ou 13, dans lequel on effectue une superposition avec d'autres images.

**15.** Procédé selon une des revendications 1 - 14, dans lequel on effectue une comparaison du signal mesuré avec un signal de référence au moyen de comparateurs dans les canaux de détection, et dans le cas d'un dépassement du signal de référence vers le bas et/ou vers le haut, on effectue une modification du mode de fonctionnement du canal de détection.

**16.** Procédé selon la revendication 15, dans lequel on effectue une coupure et/ou une non considération du canal de détection correspondant.

**17.** Procédé selon une des revendications 1 - 16, dans lequel les signaux des canaux de détection sont respectivement générés au moyen d'au moins un circuit d'intégration.

**18.** Procédé selon une des revendications 1 - 16, dans lequel les signaux des canaux de détection sont générés au moyen du comptage des photons suivi d'une conversion numérique/analogique.

**19.** Procédé selon la revendication 18, dans lequel on effectue le comptage des photons en corrélation avec le temps.

**20.** Procédé selon une des revendications 1 - 19, **caractérisé** pour l'enregistrement optique par l'utilisation de grandeurs caractéristiques du comportement en fonction de la longueur d'ondes d'un échantillon illuminé, notamment le comportement d'émission et/ou d'absorption, de préférence de la fluorescence et/ou de la luminescence et/ou de la phosphorescence et/ou de l'émission lumineuse activée par enzymes et/ou de la fluorescence activée par enzymes.

**21.** Procédé selon une des revendications 1 - 19, **caractérisé par** l'utilisation pour distinguer différents colorants et/ou pour déterminer la composition locale des colorants d'un point de l'image lors de l'utilisation simultanée de plusieurs colorants et/ou pour déterminer le décalage local du spectre d'émission en fonction de l'environnement local auquel le/les colorants sont liés et/ou pour mesurer les proportions d'émission de colorants pour déterminer des concentrations ioniques.

**22.** Procédé selon une des revendications 1 - 19, **caractérisé par** l'utilisation pour distinguer différents colorants et/ou pour déterminer la composition locale des colorants d'un point de l'image lors de l'utilisation simultanée de plusieurs colorants et/ou pour déterminer le décalage local du spectre d'absorption en fonction de l'environnement local auquel le/les colorants sont liés et/ou pour mesurer les proportions d'absorption pour déterminer des concentrations ioniques.

23. Procédé selon une des revendications 1 19, **caractérisé par** l'utilisation pour l'enregistrement de la fluorescence à un et/ou à plusieurs photons et/ou par la fluorescence excitée par des photons intriqués.

24. Procédé selon une des revendications 1 - 19, **caractérisé par** l'utilisation pour l'illumination parallèle et la détection, de préférence dans le dépistage de principes actifs, l'échantillon étant de préférence une plaque de microtitration.

25. Procédé selon une des revendications 1 - 19, **caractérisé par** l'utilisation pour la détection dans un microscope à balayage à champ proche.

26. Procédé selon une des revendications 1 - 19, **caractérisé par** l'utilisation pour la détection d'une fluorescence de colorant à un et/ou à plusieurs photons dans un spectroscope à corrélation de fluorescence.

27. Microscope à balayage laser pour l'enregistrement optique de grandeurs caractéristiques d'un échantillon illuminé avec :

   un détecteur à résolution spatiale pour la détection du rayonnement rétrodiffusé, réfléchi et/ou fluorescent et/ou transmis par l'échantillon
   un élément de reproduction pour la reproduction du rayonnement provenant de l'échantillon sur le détecteur, et
   un élément dispersif placé devant le détecteur pour la mesure à résolution spectrale,

   **caractérisé**
   **en ce que** pour décaler la position du rayonnement mesuré en résolution spatiale par rapport au détecteur, on réalise de manière à pouvoir décaler le détecteur dans la direction de sa résolution spatiale et/ou l'élément de reproduction autour d'au moins un axe et/ou un élément réflecteur autour d'au moins un axe et/ou l'élément dispersif autour d'au moins un axe, la taille du pas du décalage étant inférieure à la dimension de la trame de la résolution spatiale du détecteur,
   et qu'on prévoit des moyens permettant de déterminer des valeurs intermédiaires au moyen d'un algorithme à partir des signaux mesurés à différents décalages pour augmenter la résolution spatiale du détecteur, et qu'on représente graphiquement ces valeurs intermédiaires sur une image affichée.

28. Microscope à balayage laser selon la revendication 27, dans lequel l'élément dispersif est réalisé de manière à pouvoir basculer autour d'au moins un axe.

29. Microscope à balayage laser selon la revendication 27, dans lequel avec un élément dispersif fixe autour d'au moins un de ses axes de basculement, l'effet de modification spatiale du basculement sur cet axe est effectué par une unité de balayage.

30. Microscope à balayage laser selon la revendication 27, dans lequel avec un scanner linéaire pour la microscopie en temps réel, on prévoit un miroir basculant autour d'au moins un axe et/ou un détecteur pouvant être décalé et/ou un miroir faisant partie d'un arrangement de miroirs de balayage pour effectuer le décalage.

31. Microscope à balayage laser selon la revendication 27, dans lequel on prévoit un miroir fixe et une unité de balayage pour le basculement autour d'un axe de basculement.

32. Microscope à balayage laser selon une des revendications 27 - 31, réalisé pour l'enregistrement de la fluorescence à un et/ou à plusieurs photons et/ou de la fluorescence excitée par des photons intriqués.

33. Microscope à balayage laser selon une des revendications 27 - 31, réalisé pour l'illumination parallèle et la détection de préférence pour le dépistage de principes actifs, l'échantillon étant de préférence une plaque de microtitration.

34. Microscope à balayage laser selon une des revendications 27 - 31, réalisé sous la forme d'un microscope à balayage à champ proche.

35. Microscope à balayage laser selon une des revendications 27 - 31, réalisé pour la détection d'une fluorescence de colorant à un et/ou à plusieurs photons dans un spectroscope à corrélation de fluorescence.

36. Microscope à balayage laser selon une des revendications 27 - 35, avec détection confocale.

**37.** Microscope à balayage laser selon une des revendications 27 - 36, avec un scanner X/Y dans l'illumination.

**38.** Microscope à balayage laser selon une des revendications 27 - 37, avec une platine de scanner X/Y.

**39.** Microscope à balayage laser selon une des revendications 27 - 38, avec détection non confocale.

**40.** Microscope à balayage laser selon une des revendications 27 - 31, avec reproduction à champ clair.

Figur : 1

EP 1 264 169 B1

**Anregung**

Kollimatoren

Faser/
oder Strahlankopplung

ZL

Scan
Linse Scanner

MDB

Okular

HBO    Tubuslinse

PMT 5
EF5

Nicht
Descannte
Detektion

Objectiv

Präparat

Kondensor

HAL    T-PMT

DBS2    PinholeOptik
DBS1

PH3
EF3

DBS3

PMT 4

PH4
EF4

PMT 3

PH2
EF2

PMT 2

PH1
EF1

PMT 1

Descannte
Detektion

Faserkoppler
Abschwächer
Lichtklappe

Faserkoppler
Abschwächer
Lichtklappe

Laser A

Laser B

Laser C

Laser D

Mikroskop          Laser Scanning Modul          Lichtquellen

Figur : 2

a.)

b.)

c.)

Figur : 3

EP 1 264 169 B1

**Komponenten zur konfokalen Detektion**

Licht vom Präparat

L

| Abbild. Optik | Konfokale Blende | Dispersives Element | Wellen-längen Scanner (WS) | Mehrkanal Lichtdetektor |
|---|---|---|---|---|
| PO | PH | DI | WS | DE |

Elektrisches Signal als Funktion der Wellen-länge

S

**Komponenten zur nicht descannten Detektion**

Licht vom Präparat

L

| Abbild. Optik | Dispersives Element | Wellen-längen Scanner (WS) | Mehrkanal Lichtdetektor |
|---|---|---|---|
| PO | DI | WS | DE |

Elektrisches Signal als Funktion der Wellen-länge

S

Figur : 4

EP 1 264 169 B1

Figur : 5

Komponenten zur konfokalen Detektion

Komponenten zur nicht descannten Detektion

Figur : 6

Detektionseinheit

dl

Multikanal -Detektor
Hamamatsu H7260

M 1

DE

Y-Koordinate

phi

Spiegel
Rotation Phi

SP

Pinholeoptik

Licht der Probe

Schlitzblende

M 2

Y

X

Figur : 7

Figur : 8

Einzelkanäle

$C_{1,n-1}$  $C_{1,2}$  $C_{1,1}$  $C_{1,0}$

$C_{2,n-1}$  $C_{2,2}$  $C_{2,1}$  $C_{2,0}$

$C_{N,n-1}$  $C_{N,2}$  $C_{N,1}$  $C_{N,0}$

$L/n$

$L$

Verschiebung

Algorithmus

Spektralkomponenten

$S(0)$  …  $S(nN)$

Figur : 9

a)

b)

Figur : 10

Figur : 11

Figur : 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19702753 A1
- WO 9507447 A
- US 5192980 A, Dixon
- DE 4327944 A
- US 6088097 A
- DE 4017317 A
- EP 0320530 A

**In der Beschreibung aufgeführte Nicht-Patentliteratur**

- **Pawley.** Handbook of biological confocal Microscopy. Plenum Press, 1995
- **Corle ; Kino.** Confocal Scanning Optical Microscopy and Related Imaging Systems. Academic Press, 1996